# EUROPEAN PATENT SPECIFICATION

(11) **EP 1 246 408 B1**
(45) Date of publication and mention of the grant of the patent: **30.04.2008**
(21) Application number: 01610034.9
(22) Date of filing: 27.03.2001
(51) Int. Cl.: H04L 12/46

(54) **Mapping of data frames from a local area network into a synchronous digital telecommunications system**
Bindung von lokalen Netzwerkrahmen mit einem synchronen digitalen Kommunikationssystem
Association de trames de paquets d'un réseau local avec un système synchrone digital de télécommunication

(43) Date of publication of application: 02.10.2002
(73) Proprietor: TELLABS DENMARK A/S, 2750 Ballerup (DK)
(72) Inventor: Poulsen, Alex, 3500 Vaerlose (DK); Hansen, Per Flemming, 2860 Soborg (DK)
(74) Representative: Boesen, Johnny Peder

(56) References cited:
- EP-A- 0 924 901
- WO-A-01/08356

## Description

The invention relates to a method of mapping data frames from a Local Area Network (LAN) into a synchronous digital telecommunications system for transmission to a number of different remote destinations, said LAN being of a type in which data frames with a VLAN identifier are used. The invention further relates to an interface device for mapping data frames from a LAN into a synchronous digital telecommunications system.

Local Area Networks (LANs), such as the Ethernet, are being installed at an increasing number of locations worldwide. The purpose of a LAN is to link a number of computers or workstations to each other and to deliver data packages or frames between these computers.

In its simplest form a LAN may consist of merely a single cable segment linking a limited number of computers, but dependent on the actual physical layout of the media cables, it is more common that several such media segments are linked together by a number of repeaters or hubs to create a larger network, which, however, still operates as a single LAN. This means that all incoming data are propagated throughout the network, and that if two computers attempt to send information simultaneously, a collision will occur. Although collisions are normal and expected events in a LAN, the number of collisions will increase when the number of computers connected to the LAN and/or the traffic level on the network increases.

To prevent collisions from travelling throughout the network, switches (or bridges) may be employed. Switches do not forward collisions, but they allow broadcasts to pass through. If also broadcasts should be prevented from travelling through the network, routers may be employed.

The computers linked together by one or more repeaters form, together with the repeaters, a LAN segment, which is also called a collision domain because collisions remain within the segment. A number of such LAN segments may then be connected together via one or more switches to form a LAN, which is also called a broadcast domain because broadcasts can propagate throughout the domain, while they are confined within the area of that domain. A broadcast domain can be connected through a router to other LANs, to a WAN (Wide Area Network) or to a normal telecommunications network, such as e.g. an SDH (Synchronous Digital Hierarchy) network.

A LAN may be segmented into a number of VLANs (Virtual LANs). This is a logical segmentation instead of a physical one, and computers belonging to a specific VLAN do not have to be physically connected together in e.g. one collision domain or LAN segment. Thus a VLAN can be seen as a group of devices from different LAN segments which can communicate together as if they were all on the same physical LAN segment. If a LAN is configured to allow for segmentation into VLANs, the data frames will have an additional VLAN tag field with a VLAN identifier (VLAN ID) indicating the VLAN to which the frame belongs. An example of this is specified in the IEEE 802.1Q standard. Most LANs today allow for VLAN segmentation.

The switching in the LAN switches may occur at layer 2 (data link layer) or layer 3 (network layer) according to the OSI (Open Systems Interconnection) model. In layer 2 switching the MAC (Medium Access Control) addresses are used. The MAC address of a device, i.e. the LAN port of a computer, is a unique 48-bit address, which is commonly assigned to the device when it is manufactured. In layer 3 switching the IP (Internet Protocol) addresses are used. The IP address is a 32-bit address, which is assigned to a device when a network is configured. It is written as four octets separated by periods.

Today, it seems that the LAN switches are going to take over at least some of the functionality earlier provided by routers. LAN layer 2/layer 3 switches have evolved into high performance low priced dedicated products, while the routers, on the other hand, are going in the direction of just being used as an interface converter box to the telecommunications networks without the need for its routing functionality, which is already supported in the layer 2/layer 3 switch. In that case, the higher performance LAN layer 2/layer 3 switches support the routing capability of the WAN router. At the same time higher and higher performance is required towards e.g. a WAN, but a layer 2/layer 3 switch does have more than enough performance and routing capacity in 100 Mbps and Gigabit space to support WAN interfaces.

It is thus a natural development to obtain point-to-point connections between different LAN sites directly via the public infrastructure by means of LAN layer 2/layer 3 switches instead of the slower and more expensive WAN routers. This gives a lower overall cost of a LAN solution, and layer 2/layer 3 switches are often needed anyway at the LAN sites.

As a sign of this development equipment companies are beginning to announce public infrastructure products supporting LAN interfaces, and magazines show that several companies are preparing e.g. ASICs or FPGAs providing LAN interfaces directly on e.g. SDH or SONET products. Furthermore, standardisation in e.g. ITU is going on, solving how to map e.g. Ethernet frames into the SDH infrastructure. There are also ideas of mapping Ethernet directly via wrappers into e.g. DWDM (Dense Wavelength Division Multiplex) point to point links.

An example of providing Ethernet interface into an SDH/SONET network is known from WO 01/08356. The disclosure of this document provides a point-to-point operation for connecting physical layer side device and network layer side device, e.g. connecting Ethernet switches and an SDH/SONET network. The Ethernet switch chip has an on-chip memory supporting MAC addresses and VLANs. MAC frames are adapted directly to the SDH/SONET network.

However, when a LAN switch is to be connected to several remote LAN sites through e.g. a public telecommunications network, as will be the case e.g. when a company has departments in several cities, a cable for each of the remote sites is needed from the LAN switch to the telecommunications network. Since the number of remote sites will often be quite large, a correspondingly high number of cables are needed, and this makes it less attractive to use a LAN switch instead of a router for connection from a LAN to an external telecommunications network.

Therefore, it is an object of the invention to provide a method of the above-mentioned type in which data frames from a LAN can be mapped into a synchronous digital telecommunications system without the need for a high number of cables from the LAN to the telecommunications network, even in the case of connections to several remote locations.

According to the invention the object is achieved in that the method comprises the steps of assigning VLAN identifiers to the remote destinations so that each VLAN identifier is assigned to only one remote destination; storing in a table destinations in said synchronous digital telecommunications system for a number of VLAN identifiers; detecting from a given data frame to be mapped the VLAN identifier of that frame; reading in said table the destination corresponding to the detected VLAN identifier; and mapping the frame into the synchronous digital telecommunications system in a channel connected to the destination read from the table.

When the VLAN identifier is used to decide the destination of frames coming from the LAN, i.e. from the LAN switch, all frames can now be sent on one single cable from the LAN switch to the entry point of the telecommunications system independent of their destination.

Expedient embodiments of the invention are achieved when the LAN is an Ethernet according to the IEEE 802.3 standard, and/or the VLAN identifier is comprised in a VLAN tag field having a format according to the IEEE 802.1Q standard. In expedient embodiments the synchronous digital telecommunications system can be an SDH (Synchronous Digital Hierarchy) network, a SONET (Synchronous Optical Network) network, or a DWDM (Dense Wavelength Division Multiplexing) network.

As mentioned, the invention also relates to an interface device for mapping data frames from a Local Area Network (LAN) into a synchronous digital telecommunications system, said LAN being of a type in which data frames with a VLAN identifier are used. When the device comprises a table for the storage of corresponding VLAN identifiers and destinations in said synchronous digital telecommunications system; means for receiving from the LAN a data frame to be mapped; means for detecting from a received data frame the VLAN identifier of that frame; means for reading in said table the destination corresponding to the detected VLAN identifier; and means for mapping the frame into the synchronous digital telecommunications system in a channel connected to the destination read from the table, data frames from the LAN can be mapped into the synchronous digital telecommunications system without the need for a high number of cables from the LAN to the telecommunications network, even in the case of connections to several remote locations.

Expedient embodiments of the interface device are achieved when the LAN is an Ethernet according to the IEEE 802.3 standard, and/or the VLAN identifier is comprised in a VLAN tag field having a format according to the IEEE 802.1Q standard. In expedient embodiments the synchronous digital telecommunications system can be an SDH (Synchronous Digital Hierarchy) network, a SONET (Synchronous Optical Network) network, or a DWDM (Dense Wavelength Division Multiplexing) network.

The invention will now be described more fully below with reference to the drawings, in which
figure 1 shows an example of a LAN,
figure 2 shows the structure of an Ethernet frame,
figure 3 shows a number of networks linked together by means of repeaters,
figure 4 shows two LAN segments connected to a LAN switch,
figure 5 shows a router connected to a number of LANs,
figure 6 shows two VLANs connected to a number of LAN switches,
figure 7 shows the structure of an Ethernet frame having a tag header,
figure 8 shows a LAN connected through an SDH network to a number of remote locations,
figure 9 shows a LAN connected to an SDH network according to the invention,
figure 10 shows a table according to the invention, and
figure 11 shows an implementation of an Ethernet-to-SDH port.

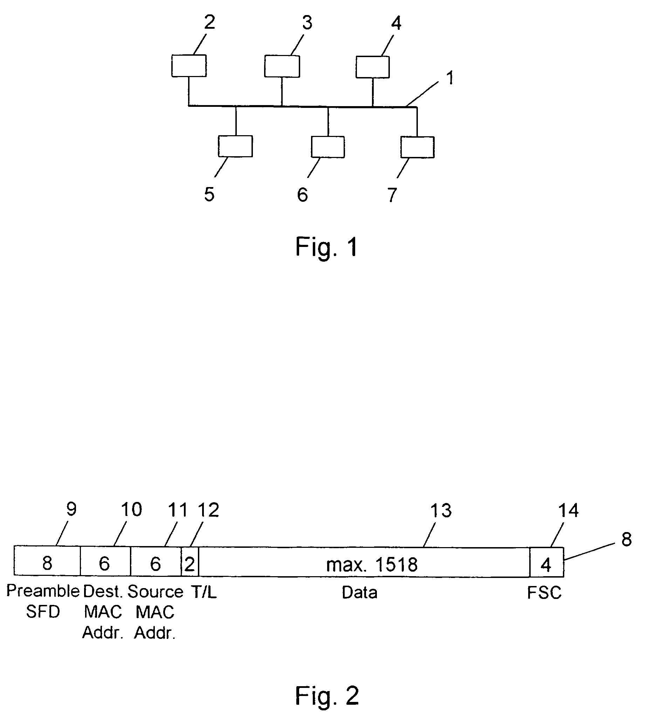

For better understanding of the invention we will first have a look at the function of a normal LAN (Local Area Network). Figure 1 shows an example of a LAN 1 which can be an Ethernet according to the IEEE 802.3 standard. The network 1 allows a number of devices 2-7 to be connected together to communicate with each other. As an example, the devices 2, 3, and 4 can be computers, and the devices 5, 6, and 7 can be peripherals, such as printers, data storages or display devices, which can in this way be shared by the computers. Although only six devices are shown in figure 1, in practice the number of devices connected to a network can be much higher. The physical medium of the network 1 may be a thick coaxial system, a thin coaxial system, a twisted-pair system or a fibre optic system, and the data rates may be 10 Mbps or 100 Mbps. In the future also data rates in the Gbps range will be possible.

Each of the devices 2-7 connected to the LAN 1 operates independently of the other devices, and thus there is no central controller of the communication on the network. All devices listen to all data transmitted on the network. When a device intends to send data, it listens to the network, and it is only allowed to transmit if no other data are being transmitted at that time. The data are transmitted serially, one bit at a time, in the form of a data frame. After each frame transmission, all devices must again contend equally for the next frame transmission opportunity. This system is called Carrier Sense Multiple Access with Collision Detection (CSMA/CD). A collision occurs if more than one device happens to start a transmission at the same moment. In this case both devices have to stop the transmission and start from the beginning again at different times. It should be noted that collisions are normal and expected events.

Each device has a unique physical or hardware address. This is a 48-bit address and is known as the MAC (Medium Access Control) address. The MAC address is pre-assigned to a device when it is manufactured. The first 24 bits identify the manufacturer, while the remaining 24 bits are used to identify the individual devices made by that manufacturer.

Figure 2 shows an example of the structure of an Ethernet frame 8. The frame 8 consists of a set of bits organized into a number of fields. The first field 9 contains a preamble, which is transmitted first to achieve stabilization and synchronization, and a Start Frame Delimiter, which indicates the start of the frame. The fields 10 and 11 contain the destination and source MAC addresses, while the field 12 is a type/length field indicating the length of the data field 13, which contains the actual data to be transmitted. Finally, the field 14 contains a check sum calculated on the other fields. The number of bytes in each field is indicated in the figure.

When a frame is sent out on the network all the devices look at the destination MAC address in the field 10 of the frame, and they compare this destination address with their own MAC address. Only the device with the same address as the destination address will read the entire frame and deliver it to the networking software running on that device. All other devices will stop reading the frame when they discover that the destination address does not match their own address.

A frame can also be broadcasted to all the devices connected to the network. In that case the destination MAC address consisting of all ones is used. All devices that see a frame with this destination address will read the frame and deliver it to the networking software running on the device.

Further to the MAC address, which, as mentioned, is assigned to each individual device when it is manufactured, a higher level address, typically named an IP (Internet Protocol) address, will be assigned to each device when a given network is configured. The IP address is a 32-bit address. The high level networking software of a device has no knowledge of the MAC addresses of the other devices, so when data should be sent to another device having a given IP address, the lower level networking software first has to find the corresponding MAC address.

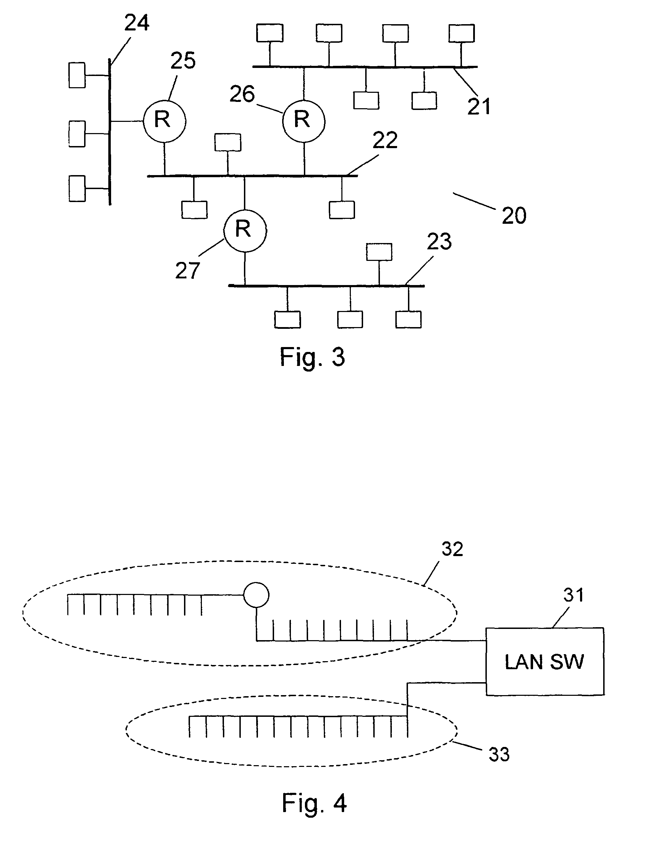

There is a limit of how many devices it is possible to connect to a single network as the one shown in figure 1. However, a number of such networks can be linked together by means of repeaters. An example of this is shown in figure 3. Four smaller networks 21, 22, 23 and 24 similar to the network 1 in figure 1 are linked to each other through the repeaters 25, 26 and 27, so that a larger network 20 is formed. Repeaters are signal amplifying and retiming devices that propagate any incoming data throughout the network 21, and thus the complete network 21 logically works as a single (but larger) LAN. This means that frames can still be broadcasted to all the devices connected to any part of the network, and that collisions may occur between any two devices in the network.

Therefore, such a network is also called a collision domain.

If too many devices are connected to a single collision domain, or if the traffic level becomes too high, collisions will occur so often that the capacity of the network may be reduced considerably. To prevent collisions from travelling through the complete network, LAN switches may be used. LAN switches do not forward collisions, but they still allow broadcasts to pass through. This is shown in figure 4, in which two collision domains or LAN segments 32 and 33 are connected to a LAN switch 31.

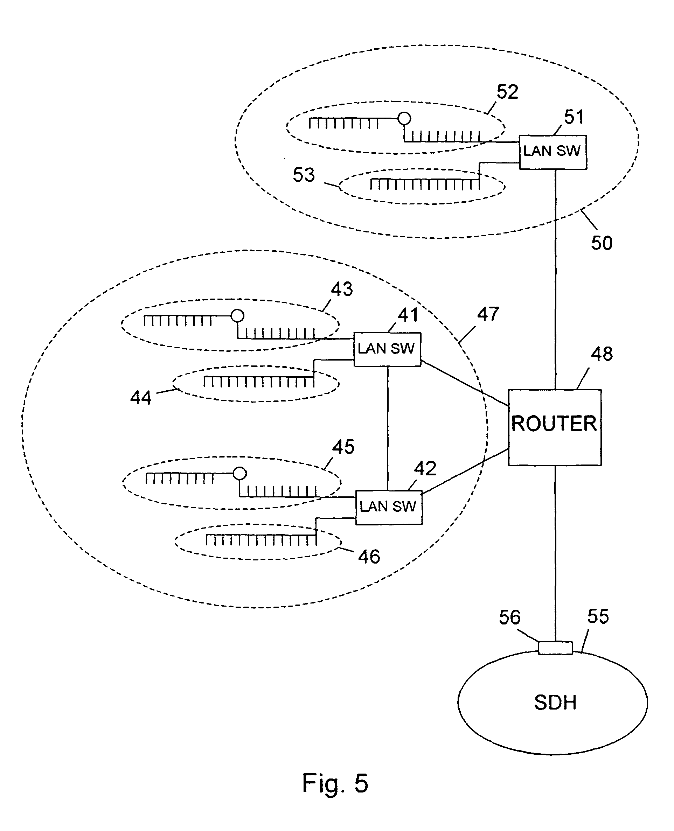

If the number of devices is so large that also broadcasts should be prevented from travelling to all other devices, a router may be used, as is shown in figure 5. Here, two LAN switches 41 and 42 are used to link the collision domains or LAN segments 43, 44, 45 and 46 together to a domain 47, which is called a broadcast domain, because broadcasts are confined within this area, while within the domain they are allowed to pass through. With the present definition, a LAN is defined as a single broadcast domain, and thus the domain 47 is considered to be a separate and complete LAN. The LAN switches 41 and 42, and thus the broadcast domain 47, are connected to a router 48. Through the router 48 the LAN 47 may be connected to other LANs forming separate broadcast domains, such as the LAN 50 in figure 5, which is shown with a LAN switch 51 and two collision domains 52 and 53. The router 48 may also be connected to the outside world in the form of e.g. a WAN (Wide Area Network), such as the Internet, or a public telecommunications network as is shown here with the SDH (Synchronous Digital Hierarchy) network 55. In the latter case Ethernet frames from the router 48 are mapped into the SDH infrastructure in the port 56. In the port 56 a connection to another (remote) port of the SDH network is set up so that the frame can be transported to the remote location where e.g. another LAN may be connected to the SDH network.

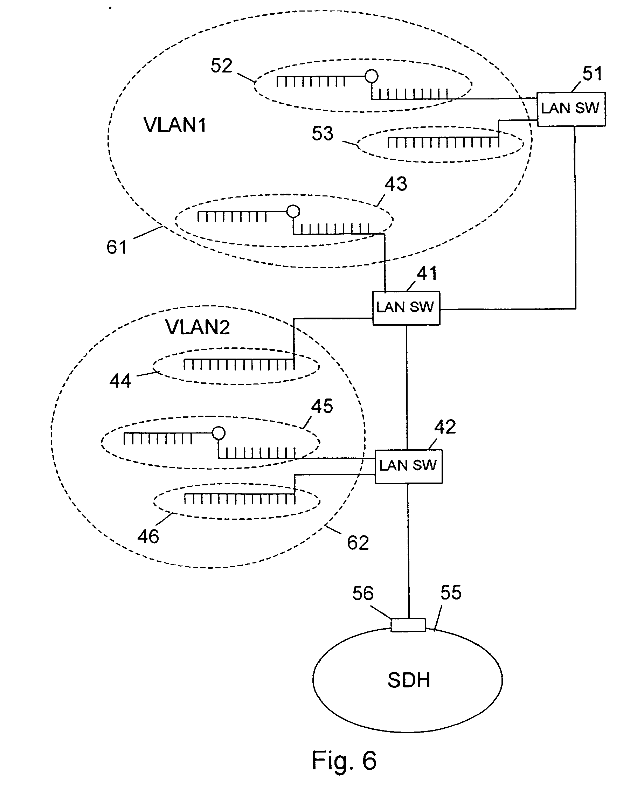

A disadvantage of using routers is that they usually take more time to process incoming data compared to a LAN switch, and a router is also a more complex and expensive component than the LAN switch. An alternative to the use of routers for the definition of broadcast domains is the use of VLANs (Virtual Local Area Networks). VLANs allow a network, i.e. a LAN, to be logically segmented into different broadcast domains, each of these smaller domains being called a VLAN. Thus a VLAN can be viewed as a group of devices on different physical LAN segments which can communicate with each other as if they were all on the same physical LAN segment. This is illustrated in figure 6, which shows the LAN switches 41, 42 and 51 connected to the LAN segments 43, 44, 45, 46, 52 and 53, respectively, like in figure 5. However, the LAN segments have now been divided into two VLANs 61 and 62, also called VLAN1 and VLAN2. It should be noted that although the figure only shows complete LAN segments in each VLAN for clarity reasons, it is possible to decide for each individual device to which VLAN it should belong. Figure 6 also shows that one of the LAN switches is now connected directly to the outside world in the form of the SDH network 55 through the port 56 without the use of any router.

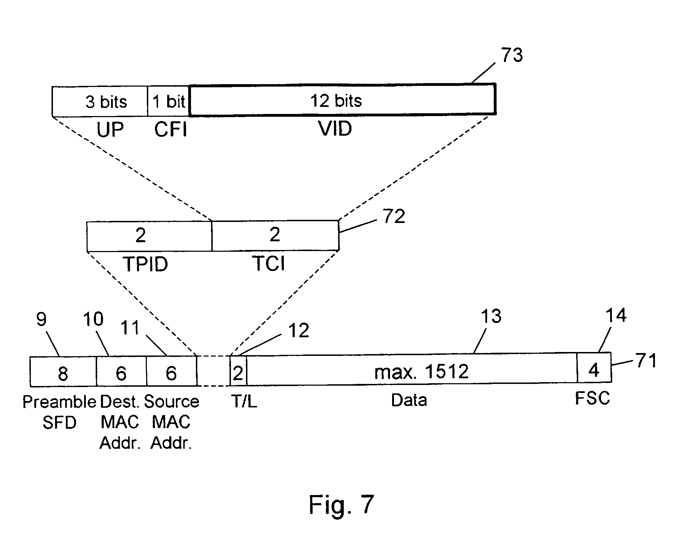

In order to allow the LAN switches to manage the segmentation of the network into different VLANs, frames sent across the network must have a way of indicating to which VLAN a given frame belongs, so that the LAN switches will forward the frames only to those devices that actually belongs to that VLAN. Without VLANs all frames would normally have been forwarded to all devices in the network. This is obtained by adding VLAN information to each frame in the form of a tag header or tag field. As shown in figure 7, which illustrates a VLAN frame 71, the tag header is a field 72 arranged between the fields 11 and 12, i.e. the source address field and the type/length field, of the normal Ethernet frame 8 that was shown in figure 2. The format of this frame is described in the IEEE 802.1Q standard.

The tag header 72 consists of a TPID (Tag Protocol IDentifier) field indicating that a tag header is following and a TCI (Tag Control Information) field. Normally both of these fields are 2-byte fields, but in some embodiments the TPID field can have up to 8 bytes. The TCI field contains a User Priority field, a CFI (Canonical Format Indicator) field and a VID (VLAN IDentifier) field 73.

The User Priority is a 3-bit field which allows priority information to be encoded in the frame. CFI is a single bit indicating that all MAC addresses present in the MAC data field are in canonical format. The VLAN ID field 73 is used to uniquely identify the VLAN to which the frame belongs. There can be a maximum of (2¹² - 1) VLANs. Zero is used to indicate that there is no VLAN ID. The VLAN ID field 73 is the important field here because it is utilized in relation to the invention, as will be described below.

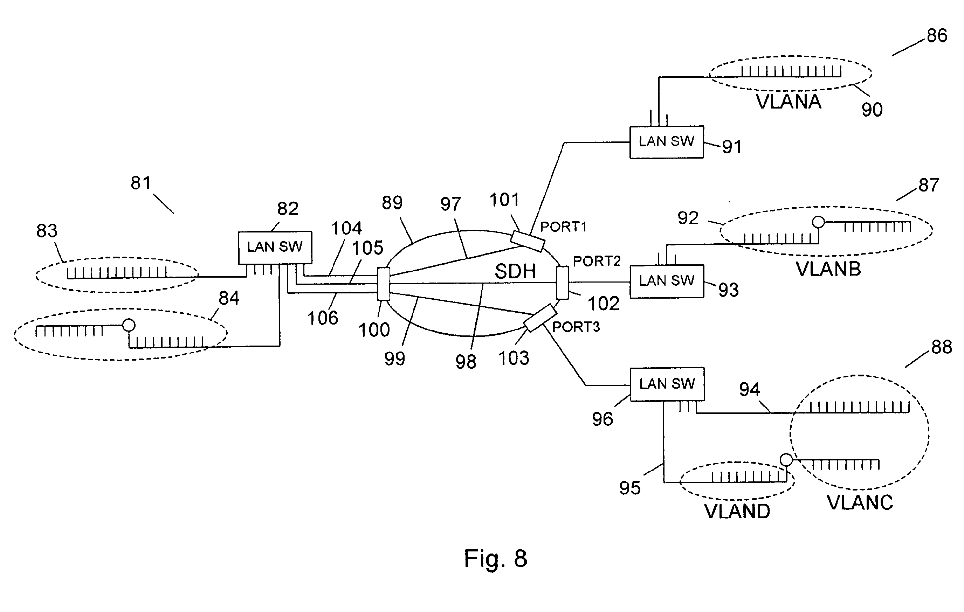

Figures 5 and 6 showed that a LAN might be connected to a public telecommunications network such as the SDH network 55. Such a connection is often used when e.g. a company has departments located in different cities and wants to connect the computers and other devices in the different departments together as if they were connected to a common LAN. An example of such a situation is shown in figure 8. At the location 81 a LAN switch 82 is shown connected to two LAN segments 83 and 84, but of course it could also be connected to other LAN switches to form a larger LAN, as was the case in figure 6. The LAN at location 81 is connected to other LANs at the remote locations 85, 86 and 87 through an SDH network 89. The network at location 86 is shown as a LAN segment 90 considered as a single VLAN (VLANA) and connected to a LAN switch 91. Similarly, the network at location 87 is shown as a LAN segment 92 considered as a single VLAN (VLANB) and connected to a LAN switch 93, while the network at location 88 is shown as a pair of LAN segments 94 and 95 divided into two VLANs (VLANC and VLAND) and connected to a LAN switch 96.

In the SDH network 89 channels or paths 97, 98 and 99 will be established between the location 81 and the different remote locations 86, 87 and 88, respectively. At each location the LAN is connected to the SDH network through an Ethernet port taking care of the mapping of the Ethernet frames to be transmitted into the SDH structure and the demapping of received frames. At the location 86 the LAN switch 91 is connected to the port 101, also called PORT1. Similarly, at location 87 the LAN switch 93 is connected to the port 102, also called PORT2, while at location 88 the LAN switch 96 is connected to the port 103, also called PORT3. Finally, at location 81 the LAN switch 82 is connected to the port 100. In this case the paths between the shown ports will be established continuously, although Ethernet frames are only transmitted asynchronously.

In order to distinguish between the three locations 86, 87 and 88 when frames are transmitted from location 81 to one of the other locations, separate terminals on the LAN switch 82 have to be used. This also means that three separate connections 104, 105 and 106 are made between the LAN switch 82 and the port 100, so that for instance frames intended for a device at location 86 are transmitted from LAN switch 82 on the connection 104 to the port 100 in which it is mapped into the already established path 97 to PORT1 and thus to the device at location 86. Thus in the port 100 frames arrived on the connection 104 are mapped into the path 97 to PORT1, frames arrived on the connection 105 are mapped into the path 98 to PORT2, and frames arrived on the connection 106 are mapped into the path 99 to PORT3. In the illustrated case with only three different remote locations it might be acceptable with three separate connections or cables between the LAN switch 82 and the port 100, but in practice the number of remote locations will typically be much higher, and thus a correspondingly high number of connections between the switch and the port is needed. The high number of connections is in itself impractical and costly, but further it will often also necessitate the use of additional LAN switches in order to have sufficient switch terminals for these connections.

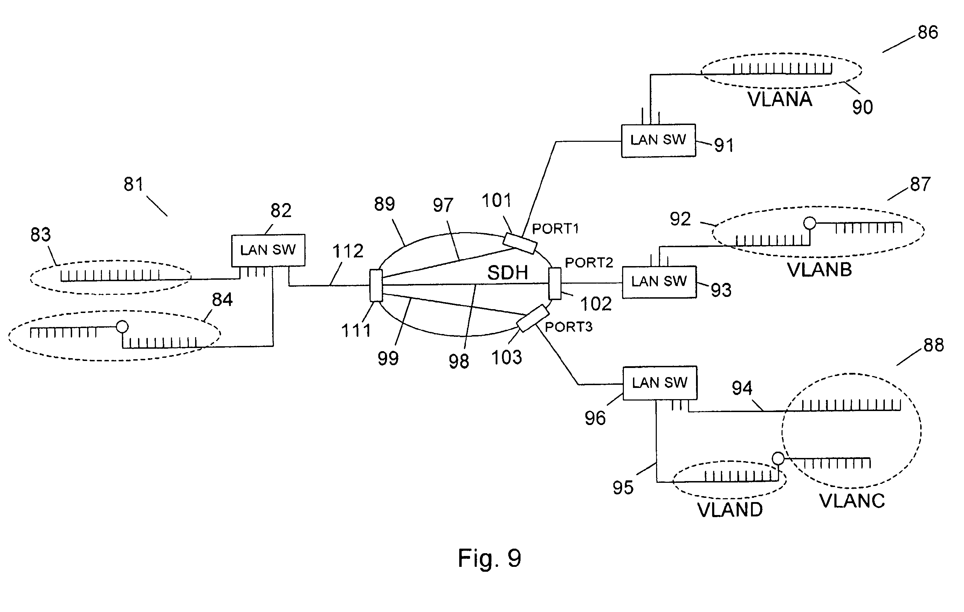

According to the invention a different port 111 is used for connecting the LAN switch 82 to the SDH network 89, as is shown in figure 9. With the use of the port 111 a single connection 112 from the LAN switch 82 to the port 111 is sufficient. This is obtained by utilizing the fact that the LAN switch 82 supports VLANs and thus make use of the tag header described above and illustrated in figure 7. The VLAN ID field 73 of the tag header for a given frame identifies the VLAN to which the frame must be transmitted, and provided that each VLAN is limited to one of the remote locations, which will normally be the case, the VLAN ID field 73 also identifies the location to which the frame is sent. This enables the port 111 to choose the destination port and thus the SDH path by reading the VLAN ID field 73 of a frame.

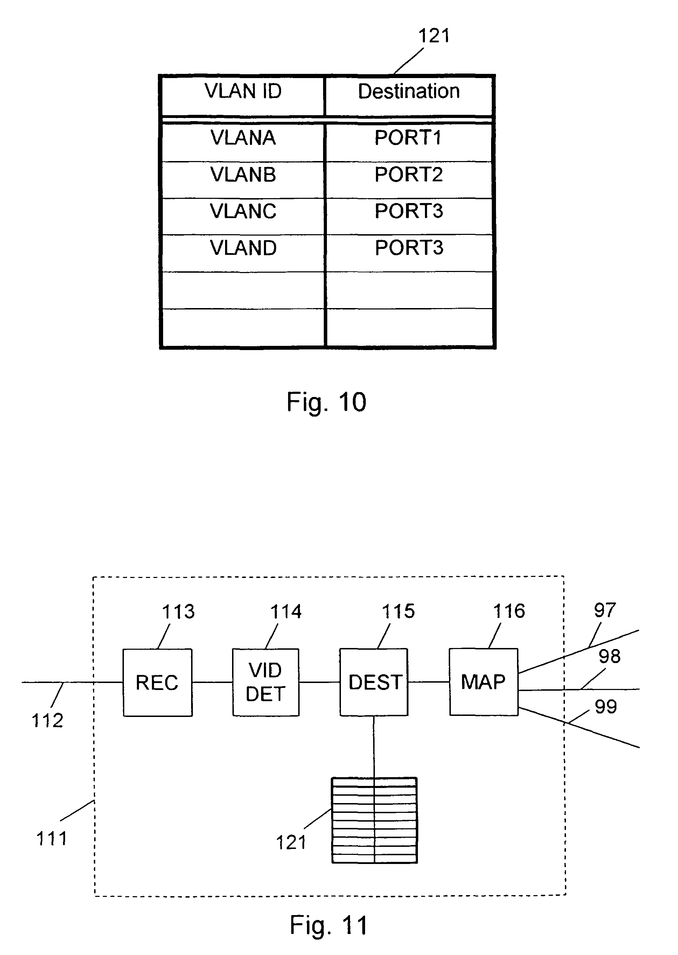

A forwarding table 121, which is shown in figure 10, containing the relations between the VLAN ID field 73 and the destination is stored in the port 111. When the port 111 receives e.g. a frame in which the VLAN ID is VLANB (i.e. the binary representation corresponding thereto) from the switch 82, the table 121 shows that the destination of that frame is PORT2, and thus the port 111 maps the frame into the SDH path 98 to PORT2 in which it is de-mapped and delivered through the LAN switch 93 to the receiving device(s) according to the destination MAC address of the frame. When a location has more than one VLAN, as is the case with VLANC and VLAND at location 88, the receiving LAN switch, in this case the LAN switch 96, also utilizes the VLAN ID of the frame to deliver the frame to the intended VLAN.

The Ethernet-to-SDH port 111 can be implemented as shown in figure 11. However, it should be noted that for reasons of clarity the figure only shows those parts of the port that are relevant to the invention. The Ethernet frames are received from the connection 112 in the receiving circuit 113, and in the detection block 114 the VLAN ID of the frame is detected by reading the field 73. The block 115 reads the destination corresponding to the detected VLAN ID from the table 121, and finally the mapping circuit 116 maps the frame into one of the SDH paths as described above.

When the port 111 utilizes the VLAN ID of a frame to decide its destination in the SDH network, a single connection from the LAN switch 82 to the port 111 is sufficient although the frames can have different destinations, and thus the high number of connections in the prior art can be avoided, and this is achieved without requiring any complex routing functionality in the Ethernet-to-SDH port 111.

Further, it is also noted that when a single Ethernet link as described here is multiplexed into a set of many lower SDH links, i.e. one per remote destination, a better performance match may also be achieved. The Ethernet speed always needs to be rate-adapted to the lower SDH link speed, and this is done by Ethernet pause frame control or via Ethernet packet shaping in the LAN switch. When a high speed Ethernet interface maps to several different SDH links, a higher performance is likely to be obtained, unless all frames for a period are mapped into the same SDH link.

Although a preferred embodiment of the present invention has been described and shown, the invention is not restricted to it, but may also be embodied in other ways within the scope of the subject-matter defined in the following claims.

## Claims

1. A method of mapping data frames from a Local Area Network (LAN) into a synchronous digital telecommunications system (89) for transmission to a number of different remote destinations (101, 102, 103), said LAN being of a type in which data frames (71) with a VLAN identifier (73) are used,
**characterized in that** the method comprises the steps of:
• assigning VLAN identifiers (73) to said remote destinations so that each VLAN identifier is assigned to only one remote destination,
• storing in a table (121) for each of said assigned VLAN identifiers the destination in said synchronous digital telecommunications system (89) to which the VLAN identifier is assigned,
• detecting from a given data frame (71) to be mapped for transmission to one of said different remote destinations the VLAN identifier (73) of that frame,
• reading in said table (121) the destination (101; 102; 103) corresponding to the detected VLAN identifier, and
• mapping the frame (71) into the synchronous digital telecommunications system (89) in a channel (97; 98; 99) connected to the destination (101; 102; 103) read from the table (121).

2. A method according to claim 1, **characterized in that** the LAN is an Ethernet according to the IEEE 802.3 standard.

3. A method according to claim 1 or 2, **characterized in that** the VLAN identifier (73) is comprised in a VLAN tag field having a format according to the IEEE 802.1Q standard.

4. A method according to any one of claims 1 to 3, **characterized in that** the synchronous digital telecommunications system (89) is an SDH (Synchronous Digital Hierarchy) network.

5. A method according to any one of claims 1 to 3, **characterized in that** the synchronous digital telecommunications system is a SONET (Synchronous Optical Network) network.

6. A method according to any one of claims 1 to 3, **characterized in that** the synchronous digital telecommunications system is a DWDM (Dense Wavelength Division Multiplexing) network.

7. An interface device (111) for mapping data frames (71) from a Local Area Network (LAN) into a synchronous digital telecommunications system (89), said LAN being of a type in which data frames with a VLAN identifier (73) are used,
**characterized in that** the device comprises
• a table (121) for the storage of destinations (101; 102; 103) in said synchronous digital telecommunications system (89) and VLAN identifers (73) assigned to said remote destinations so that each VLAN identifer is assigned to only one remote destination,
• means (113) for receiving from the LAN a data frame (71) to be mapped,
• means (114) for detecting from a received data frame (71) to be mapped for transmission to one of said different remote destinations the VLAN identifier (73) of that frame,
• means (115) for reading in said table (121) the destination (101; 102; 103) corresponding to the detected VLAN identifier, and
• means (116) for mapping the frame (71) into the synchronous digital telecommunications system (89) in a channel (97; 98; 99) connected to the destination (101; 102; 103) read from the table (121).

8. An interface device according to claim 7, **characterized in that** the LAN is an Ethernet according to the IEEE 802.3 standard.

9. An interface device according to claim 7 or 8, **characterized in that** the VLAN identifier (73) is comprised in a VLAN tag field having a format according to the IEEE 802.1Q standard.

10. An interface device according to any one of claims 7 to 9, **characterized in that** the synchronous digital telecommunications system (89) is an SDH (Synchronous Digital Hierarchy) network.

11. An interface device according to any one of claims 7 to 9, **characterized in that** the synchronous digital telecommunications system is a SONET (Synchronous Optical Network) network.

12. An interface device according to any one of claims 7 to 9, **characterized in that** the synchronous digital telecommunications system is a DWDM (Dense Wavelength Division Multiplexing) network.

## Patentansprüche

1. Verfahren zum Abbilden von Datenrahmen von einem lokalen Netzwerk (LAN) in ein synchrones digitales Telekommunikationssystem (89) zur Übertragung zu einer Anzahl von unterschiedlichen entfernten Zielen (101, 102, 103), wobei das LAN von einem Typ ist, in dem Datenrahmen (71) mit einer VLAN-Kennung (73) verwendet werden,
**dadurch gekennzeichnet, dass** das Verfahren die Schritte umfasst:
• Zuordnen von VLAN-Kennungen (73) zu den entfernten Zielen, so dass jede VLAN-Kennung nur einem entfernten Ziel zugeordnet ist,
• Speichern des Ziels in dem synchronen digitalen Telekommunikationssystem (89), dem die VLAN-Kennung zugeordnet ist, für jede der
• zugeordneten VLAN-Kennungen in einer Tabelle (121),
• Detektieren aus einem gegebenen Datenrahmen (71), der zur Übertragung zu einem von den unterschiedlichen entfernten Zielen abzubilden ist, der VLAN-Kennung (73) dieses Rahmens,
• Lesen des Ziels (101; 102; 103) entsprechend der detektierten VLAN-Kennung in der Tabelle (121), und
• Abbilden des Rahmens (71) in das synchrone digitale Telekommunikationssystem (89) in einen Kanal (97; 98; 99), der mit dem aus der Tabelle (121) ausgelesenen Ziel (101; 102; 103) verbunden ist.

2. Verfahren nach Anspruch 1, **dadurch gekennzeichnet, dass** das LAN ein Ethernet entsprechend dem IEEE 802.3-Standard ist.

3. Verfahren nach Anspruch 1 oder 2, **dadurch gekennzeichnet, dass** die VLAN-Kennung (73) in einem VLAN-Kennungsfeld mit einem Format entsprechend dem IEEE 802.1Q-Standard enthalten ist.

4. Verfahren nach einem der Ansprüche 1 bis 3, **dadurch gekennzeichnet, dass** das synchrone digitale Telekommunikationssystem (89) ein SDH (Synchrondigitalhierarchie) Netzwerk ist.

5. Verfahren nach einem der Ansprüche 1 bis 3, **dadurch gekennzeichnet, dass** das synchrone digitale Telekommunikationssystem ein SONET (synchrones optisches Netzwerk) Netzwerk ist.

6. Verfahren nach einem der Ansprüche 1 bis 3, **dadurch gekennzeichnet, dass** das synchrone digitale Telekommunikationssystem ein DWDM (dichtes Wellenlängenmultiplex) Netzwerk ist.

7. Schnittstellengerät (111) zum Abbilden von Datenrahmen (71) von einem lokalen Netzwerk (LAN) in ein synchrones digitales Telekommunikationssystem (89), wobei das LAN von einem Typ ist, in dem Datenrahmen mit einer VLAN-Kennung (73) verwendet werden,
**dadurch gekennzeichnet, dass** das Gerät umfasst
• eine Tabelle (121) zur Speicherung von Zielen (101; 102; 103) in dem synchronen digitalen Telekommunikationssystem (89) und VLAN-Kennungen (73), die den entfernten Zielen zugeordnet sind, so dass jede VLAN-Kennung nur einem entfernten Ziel zugeordnet ist,
• Einrichtungen (113) zum Empfang eines Datenrahmens (71), der abzubilden ist, von dem LAN,
• Einrichtungen (114) zum Detektieren aus einem empfangenen Datenrahmen (71), der zur Übertragung zu einem von den unterschiedlichen entfernten Zielen abzubilden ist, der VLAN-Kennung (73) dieses Rahmens,
• Einrichtungen (115) zum Lesen des Ziels (101; 102; 103) entsprechend der detektierten VLAN-Kennung in der Tabelle (121), und
• Einrichtungen (116) zum Abbilden des Rahmens (71) in das synchrone digitale Telekommunikationssystem (89) in einen Kanal (97; 98; 99), der mit dem aus der Tabelle (121) ausgelesenen Ziel (101; 102; 103) verbunden ist.

8. Schnittstellengerät nach Anspruch 7, **dadurch gekennzeichnet, dass** das LAN ein Ethernet entsprechend dem IEEE 802.3-Standard ist.

9. Schnittstellengerät nach Anspruch 7 oder 8, **dadurch gekennzeichnet, dass** die VLAN-Kennung (73) in einem VLAN-Kennungsfeld mit einem Format entsprechend dem IEEE 802.1Q-Standard enthalten ist.

10. Schnittstellengerät nach einem der Ansprüche 7 bis 9, **dadurch gekennzeichnet, dass** das synchrone digitale Telekommunikationssystem (89) ein SDH-(Synchrondigitalhierarchie) Netzwerk ist.

11. Schnittstellengerät nach einem der Ansprüche 7 bis 9, **dadurch gekennzeichnet, dass** das synchrone digitale Telekommunikationssystem ein SONET-(synchrones optisches Netzwerk) Netzwerk ist.

12. Schnittstellengerät nach einem der Ansprüche 7 bis 9, **dadurch gekennzeichnet, dass** das synchrone digitale Telekommunikationssystem ein DWDM-(dichtes Wellenlängenmultiplex) Netzwerk ist.

## Revendications

1. Procédé d'association de trames de données d'un réseau local (LAN) avec un système de télécommunications numérique synchrone (89) en vue d'une transmission vers un certain nombre de destinations éloignées différentes (101, 102, 103), ledit LAN étant d'un type dans lequel des trames de données (71) ayant un identifiant de réseau local virtuel (73) sont utilisées,
**caractérisé en ce que** le procédé comprend les étapes consistant à :
- attribuer des identifiants de réseau local virtuel (73) auxdites destinations éloignées afin que chaque identifiant de réseau local virtuel soit attribué à une seule destination éloignée,
- stocker dans une table (121), pour chacun desdits identifiants de réseau local virtuel attribués, la destination dans ledit système de télécommunications numérique synchrone (89) à laquelle l'identifiant de réseau local virtuel est attribué,
- détecter, à partir d'une trame de données donnée (71) à associer en vue d'une transmission vers l'une desdites différentes destinations éloignées, l'identifiant de réseau local virtuel (73) de cette trame,
- lire, dans ladite table (121), la destination (101 ; 102 ; 103) correspondant à l'identifiant de réseau local virtuel détecté, et
- associer la trame (71) au système de télécommunications numérique synchrone (89) sur un canal (97 ; 98 ; 99) relié à la destination (101 ; 102 ; 103) lue à partir de la table (121).

2. Procédé selon la revendication 1, **caractérisé en ce que** le LAN est un Ethernet selon la norme IEEE 802.3.

3. Procédé selon la revendication 1 ou 2, **caractérisé en ce que** l'identifiant de réseau local virtuel (73) est compris dans un champ de marqueur de réseau local virtuel ayant un format conforme à la norme IEEE 802.1Q.

4. Procédé selon l'une quelconque des revendications 1 à 3, **caractérisé en ce que** le système de télécommunications numérique synchrone (89) est un réseau SDH (à hiérarchie numérique synchrone).

5. Procédé selon l'une quelconque des revendications 1 à 3, **caractérisé en ce que** le système de télécommunications numérique synchrone est un réseau SONET (réseau optique synchrone).

6. Procédé selon l'une quelconque des revendications 1 à 3, **caractérisé en ce que** le système de télécommunications numérique synchrone est un réseau DWDM (à multiplexage en longueur d'onde dense).

7. Dispositif d'interface (111) destiné à associer des trames de données (71) d'un réseau local (LAN) avec un système de télécommunications numérique synchrone (89), ledit LAN étant d'un type dans lequel des trames de données ayant un identifiant de réseau local virtuel (73) sont utilisées,
**caractérisé en ce que** le dispositif comprend
- une table (121) destinée au stockage de destinations (101 ; 102 ; 103) dans ledit système de télécommunications numérique synchrone (89) et d'identifiants de réseau local virtuel (73) attribués auxdites destinations éloignées afin que chaque identifiant de réseau local virtuel soit attribué à une seule destination éloignée,
- un moyen (113) destiné à recevoir de la part du LAN une trame de données (71) à associer,
- un moyen (114) destiné à détecter, à partir d'une trame de données reçue (71) à associer en vue d'une transmission vers l'une desdites différentes destinations éloignées, l'identifiant de réseau local virtuel (73) de cette trame,
- un moyen (115) destiné à lire, dans ladite table (121), la destination (101 ; 102 ; 103) correspondant à l'identifiant de réseau local virtuel détecté, et
- un moyen (116) destiné à associer la trame (71) au système de télécommunications numérique synchrone (89) sur un canal (97 ; 98 ; 99) relié à la destination (101 ; 102 ; 103) lue à partir de la table (121).

8. Dispositif d'interface selon la revendication 7, **caractérisé en ce que** le LAN est un Ethernet selon la norme IEEE 802.3.

9. Dispositif d'interface selon la revendication 7 ou 8, **caractérisé en ce que** l'identifiant de réseau local virtuel (73) est compris dans un champ de marqueur de réseau local virtuel ayant un format conforme à la norme IEEE 802.1Q.

10. Dispositif d'interface selon l'une quelconque des revendications 7 à 9, **caractérisé en ce que** le système de télécommunications numérique synchrone (89) est un réseau SDH (à hiérarchie numérique synchrone).

11. Dispositif d'interface selon l'une quelconque des revendications 7 à 9, **caractérisé en ce que** le système de télécommunications numérique synchrone est un réseau SONET (réseau optique synchrone).

12. Dispositif d'interface selon l'une quelconque des revendications 7 à 9, **caractérisé en ce que** le système de télécommunications numérique synchrone est un réseau DWDM (à multiplexage en longueur d'onde dense).
